# FASCICULE DE BREVET EUROPEEN

(11) **EP 1 427 613 B1**
(45) Date de publication et mention de la délivrance du brevet: **06.09.2006**
(21) Numéro de dépôt: 02783172.6
(22) Date de dépôt: 18.09.2002
(51) Int. Cl.: B60R 25/04, F02P 11/04, G01D 5/245

(54) **CAPTEUR MAGNETIQUE DE POSITION AVEC CODE D'IDENTITE ET DISPOSITIF DE SECURITE EN FAISANT APPLICATION**
MAGNETISCHER POSITIONSGEBER MIT EINEM IDENTITÄTSKODE UND SEINE VERWENDUNG IN EINEM SICHERHEITSSYSTEM
MAGNETIC POSITION SENSOR WITH IDENTITY CODE AND SECURITY DEVICE USING SAME

(30) Priorité: 20.09.2001 FR 0112137
(43) Date de publication de la demande: 16.06.2004
(73) Titulaire: Electricfil Industrie, 01708 Miribel Cédex (FR)
(72) Inventeur: ANDRIEU, Olivier, F-01700 ST-MAURICE DE BEYNOST (FR); YVON, Jean-Baptiste, F-38090 VAULX-MILLIEU (FR)
(74) Mandataire: Thibault, Jean-Marc
(86) Numéro de dépôt international: PCT/FR2002/003183
(87) Numéro de publication internationale: WO 2003/024754

(56) Documents cités:
- EP-A- 0 443 938
- DE-A- 4 336 212
- GB-A- 2 251 503
- US-A- 5 615 649

## Description

L'objet de l'invention concerne le domaine technique des capteurs magnétiques, du type comportant un élément codeur se déplaçant à proximité d'une cellule de détection et adapté pour repérer au moins une position angulaire au sens général.

L'objet de l'invention vise plus précisément un capteur magnétique de position auquel est associé un code d'identité, de manière à permettre une reconnaissance et/ou un traitement spécifique du signal électrique délivré par le capteur de position.

L'objet de l'invention trouve une application particulièrement avantageuse dans le domaine automobile où un tel capteur peut être utilisé, par exemple, dans le cadre de la fonction antivol des véhicules.

Dans le domaine d'application préféré ci-dessus, il est connu, pour la protection antivol des véhicules, d'affecter à chaque véhicule divers codes d'identification enregistrés dans une ou plusieurs unités de contrôle électronique montées à l'intérieur d'un véhicule. Lorsqu'un code d'identification transmis par l'intermédiaire d'un transpondeur est identique à celui enregistré, les unités de contrôle électronique autorisent le démarrage du véhicule.

Or, il a été constaté que certaines unités de contrôle électronique pouvaient être remplacées relativement facilement par des unités analogues, de sorte que la fonction antivol n'est plus assurée.

Pour tenter de remédier à cet inconvénient, il a été envisagé de délocaliser certains codes d'identification dans des zones du véhicule difficilement accessibles. Dans le même sens, il a été envisagé que le capteur de régime du moteur ne délivre pas son signal de sortie à l'unité de contrôle électronique moteur lorsque le code d'identification n'est pas reconnu, de manière à ne pas permettre le démarrage du véhicule.

Ainsi, il a été proposé d'associer au capteur du régime moteur, un code d'identité qui, lorsqu'il est différent du code d'identification transmis, ne permet pas la génération du signal du régime moteur. Une proposition de réalisation consiste à enregistrer le code d'identité affecté au capteur magnétique dans une mémoire. Or, il doit être considéré que, compte tenu du montage de cette mémoire à proximité du moteur, elle est soumise à des températures relativement élevées et à des vibrations entraînant sa détérioration.

Il est connu, par ailleurs, par le brevet EP 0 443 938, un capteur magnétique de rotation d'un moteur à combustion interne selon le préamble de la revendication 1.

Il apparaît donc le besoin de pouvoir disposer d'un capteur magnétique de position auquel est affecté un code d'identité, un tel capteur étant conçu pour conserver son efficacité, même en étant soumis à des températures relativement élevées et à des vibrations.

L'objet de l'invention vise donc à satisfaire ce besoin, en proposant un capteur magnétique rotatif selon la revendication 1.

Il est également connu, par ailleurs, par le brevet US 5 615 649 un dispositif de sécurité pour véhicules automobiles comportant un capteur magnétique de position, apte à délivrer un signal représentatif du régime moteur du véhicule. Un tel signal est analysé pour constituer un code d'identification qui est comparé à un code fourni par l'utilisateur du véhicule.

Un autre objet de l'invention vise à proposer un capteur destiné à être intégré dans un dispositif de sécurité pour permettre une fonction antivol du véhicule équipé d'un tel capteur.

Pour atteindre cet objectif, l'objet de l'invention vise donc à proposer un dispositif de sécurité comportant :
- un capteur conforme à l'invention,
- et des moyens de contrôle reliés aux moyens d'analyse et permettant :
   - de comparer le code d'identité du capteur et un code d'identification,
   - et lorsque le code d'identité du capteur correspond au code d'identification, d'autoriser la sortie du signal périodique de référence,
   - et lorsque le code d'identité du capteur ne correspond pas au code d'identification, à inhiber la sortie du signal périodique de référence.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une vue en perspective montrant, de manière schématique, un exemple de réalisation d'un capteur conforme à l'invention.
La **fig. 2** est une vue en coupe transversale montrant un détail de réalisation du capteur conforme à l'invention.
La **fig. 3** représente des chronogrammes permettant d'illustrer le fonctionnement du capteur conforme à l'invention.
La **fig. 4** est un schéma bloc fonctionnel permettant d'expliciter le principe de fonctionnement du capteur selon l'invention.
La **fig. 5** est un schéma bloc fonctionnel montrant un exemple préféré d'application du capteur selon l'invention.

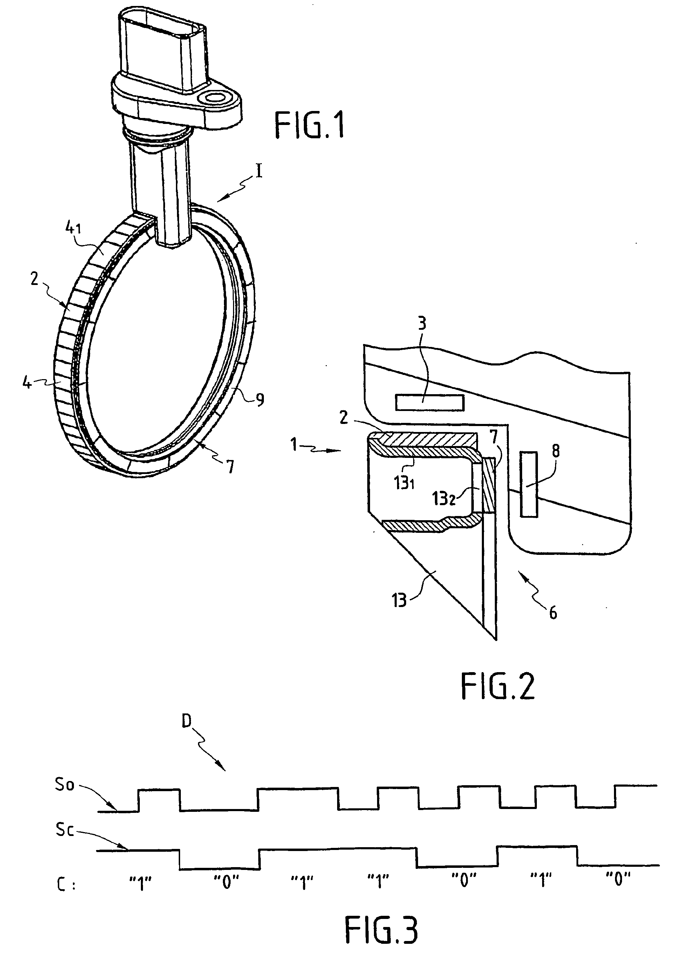

Les **fig. 1** et **2** montrent un exemple de réalisation d'un capteur magnétique rotatif auquel est associé un code d'identité, ce capteur étant désigné dans son ensemble par la référence **I**.

Un tel capteur **I** comporte un capteur magnétique de position **1,** comprenant au moins une piste magnétique **2** apte à être entraînée en rotation par un moyen d'entraînement rotatif, non représenté mais connu en soi. Une telle piste magnétique **2** est destinée à défiler devant au moins une cellule de détection **3** sensible à un champ magnétique. La piste magnétique **2** est réalisée sous la forme d'un anneau magnétique multipolaire entraîné en rotation autour de son centre. La piste magnétique **2** comporte une série d'éléments générateurs **4** d'un champ magnétique variable répartis pour présenter un pas régulier d'écartement. Dans l'exemple de réalisation illustré sur les **fig**. **1** et **2**, les éléments générateurs d'un champ magnétique variable **4** sont formés par des pôles magnétiques alternés de même largeur. Ainsi, la piste magnétique **2** comporte une série de pôles Sud et de pôles Nord alternés, présentant une aimantation radiale. Par exemple, la largeur angulaire de chaque pôle est de 3°.

La piste magnétique **2** comporte également au moins un élément générateur, dit irrégulier **4**_{**1**}**,** présentant un écartement différent par rapport au pas d'écartement défini entre les autres éléments générateurs **4.** Par exemple, l'élément générateur irrégulier **4**_{**1**} présente un pas angulaire double par rapport à celui des autres éléments générateurs **4.** La présence d'un tel élément générateur irrégulier **4**_{**1**} constitue un repère pour le capteur magnétique, permettant de déterminer au moins une position angulaire. Bien entendu, il peut être prévu de réaliser un ou plusieurs éléments générateurs irréguliers **4**_{**1**} sur la piste magnétique **2.**

Il est à noter qu'il peut être envisagé de réaliser la piste magnétique **2** avec des éléments générateurs d'un champ magnétique **4, 4**_{**1**}**,** formés par des éléments perturbateurs d'un champ magnétique créé par un aimant fixe placé à proximité de ladite piste magnétique. Par exemple, les éléments perturbateurs peuvent être constitués par l'intermédiaire de dents aménagées dans une bague réalisée en un matériau ferromagnétique.

La piste magnétique **2** est destinée à défiler devant la cellule de détection fixe **3** qui délivre un signal électrique périodique correspondant à l'évolution de l'intensité du champ magnétique délivré par les éléments générateurs **4, 4**_{**1**}**.** D'une manière classique, la cellule de détection **3** est associée à des moyens de traitement, tels qu'un comparateur de niveaux à hystérésis, non représenté mais connu en soi, délivrant un signal électrique périodique **S**_{**0**} de référence, présentant des transitions franches pour des valeurs distinctes du champ magnétique selon qu'il varie en croissant ou en décroissant. La **fig**. **3** illustre un exemple de signal périodique de référence **S**_{**0**} délivré par un tel capteur de position **1.** Un tel signal de référence **S**_{**0**} présente une périodicité donnée par les éléments générateurs **4** régulièrement espacés. Un tel signal électrique de référence **S**_{**0**} présente également une discontinuité **D** formant un repère pour déterminer une position angulaire et correspondant au pôle dit inégulier **4**_{**1**}.

Conformément à l'objet de l'invention, le capteur **I** comporte également un moyen **6** de génération d'un code d'identité **C** pour le capteur magnétique de position **1.** Un tel moyen de génération **6** comporte au moins un codeur magnétique **7** apte à être entraîné en rotation par le moyen d'entraînement rotatif de la piste magnétique **2.** Ce codeur magnétique **7** est destiné à défiler devant une cellule de détection **8** sensible à un champ magnétique. Le codeur magnétique **7** est formé par une série d'éléments générateurs **9** d'un champ magnétique variable arrangés de manière que ladite cellule de détection **8** délivre un signal de codage **S**_{**c**}, formé par une combinaison de signaux correspondant au code d'identité **C** du capteur magnétique associé **1.**

Dans l'exemple de réalisation illustré, le codeur magnétique **7** se présente sous la forme d'une bague magnétique multipolaire composée des éléments générateurs 9 formés par des pôles magnétiques alternés et arrangés selon un pas d'écartement déterminé de manière que la cellule **8** délivre un signal de codage **S**_{**C**} formé par une combinaison de signaux. Ainsi, la cellule de détection **8** qui est associée à des moyens de traitement tels qu'un comparateur de niveaux à hystérésis, délivre un signal électrique binaire **S**_{**C**}. Ainsi, il doit être considéré que le code d'identité **C** du capteur magnétique **1** est réalisé par un codage magnétique correspondant à une suite déterminée de niveaux binaires, comme cela ressort clairement de la **fig**. **3.**

Selon une forme préférée de réalisation, la piste magnétique **2** et le codeur magnétique **7** sont formés chacun à partir d'une bague élastomère ou plastique, chargée de particules magnétisées pour constituer les pôles magnétiques.

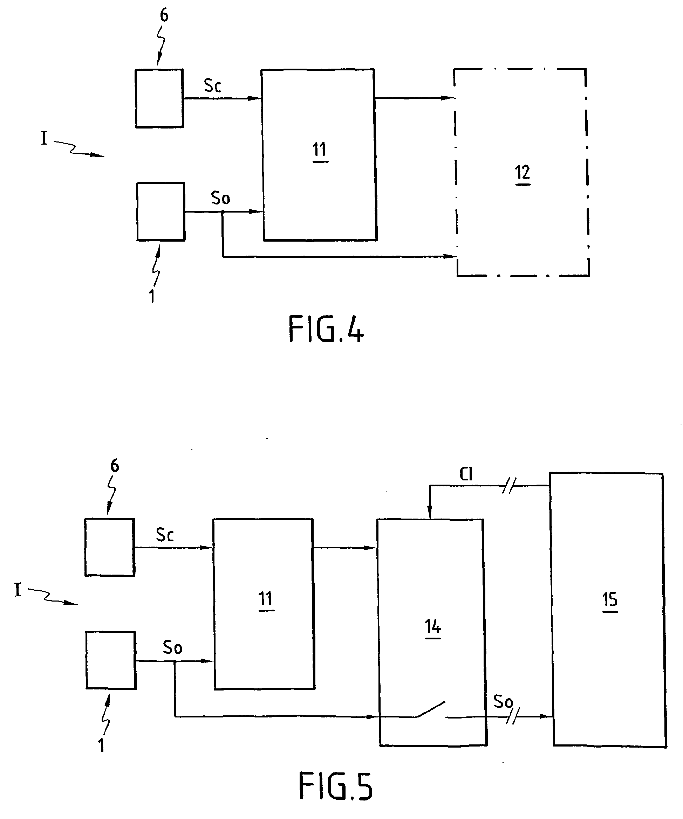

Selon une autre caractéristique de l'invention apparaissant plus précisément à la **fig. 4,** le capteur **I** comporte des moyens **11** d'analyse du signal de codage **S**_{**C**} à l'aide du signal périodique de référence S₀, de manière à déterminer ou lire le code d'identité **C** du capteur magnétique **I.** En effet, il doit être considéré qu'en raison de la vitesse de rotation variable de la piste magnétique **2** et du codeur magnétique **7**, la lecture du signal de codage **S**_{**C**} doit être effectuée en prenant en compte le signal électrique périodique de référence **S**_{**0**} qui constitue une horloge pour le décodage du signal de codage **S**_{**C**}**.** De plus, la présence de la discontinuité **D** dans le signal périodique **S**_{**0**} permet de constituer un repère pour le décodage du signal de codage **S**_{**C**}**,** et permet ainsi de retrouver le code d'identité C associé audit capteur **1.**

Ainsi, tel que cela ressort de la **fig**. **4,** les moyens d'analyse **11** permettent ainsi de délivrer le code d'identité **C** du capteur **1,** ainsi que son signal périodique de référence **S**_{**0**}, pour être exploités de toute manière convenable par une unité électronique d'exploitation **12** en vue de diverses applications.

Dans un exemple de réalisation préférée de l'objet de l'invention tel qu'illustré à la **fig. 5,** le capteur **I** selon l'invention est destiné à être mis en oeuvre dans un dispositif de sécurité permettant une fonction antivol du véhicule équipé d'un tel capteur **I.** Dans une telle application, l'anneau magnétique **2** et le codeur magnétique **7** sont montés sur une cible **13** calée en rotation sur un arbre moteur d'un véhicule automobile, de sorte que la cellule de détection **3,** montée en relation de l'anneau magnétique **2,** délivre un signal périodique représentatif du régime moteur. Selon cet exemple, la sortie des moyens d'analyse **11** est reliée à des moyens de contrôle **14** comportant un moyen de comparaison entre le code d'identité **C** du capteur magnétique rotatif **1** et un code d'identification **CI,** transmis par exemple par un transpondeur directement ou via une unité électronique de contrôle **15.** Ces moyens de contrôle **14** permettent, lorsque le code d'identité **C** du capteur magnétique rotatif **1** correspond au code d'identification **CI,** d'autoriser la sortie du signal périodique de référence **S**_{**0**}**,** par exemple vers l'unité électronique de contrôle **15,** et, lorsque le code d'identité C du capteur magnétique rotatif **1** ne correspond pas au code d'identification **CI,** à inhiber la sortie du signal périodique de référence **S**_{**0**}**.** Ainsi, les moyens de contrôle **14** permettent d'interdire la sortie du signal périodique de référence **S**_{**0**} correspondant au signal du régime moteur du véhicule, de sorte que les fonctions d'allumage du véhicule ne peuvent pas être assurées.

De préférence, ces moyens de contrôle **14** sont intégrés au niveau du capteur magnétique **(I),** de manière à être difficilement accessibles et à éviter l'envoi, pour traitement, d'un tel signal de référence **S**_{**0**} à l'unité de contrôle électronique **15** susceptible d'être facilement accessible.

Selon une caractéristique de mise en oeuvre, le codeur **I** est destiné à être monté sur une poulie d'entraînement montée en sortie du moteur d'un véhicule automobile, c'est-à-dire sur une poulie de distribution ou sur l'une des poulies auxiliaires. La cible **13** comporte une paroi périphérique **13**_{**1**} et une paroi transversale **13**_{**2**}**,** destinées à recevoir respectivement l'anneau magnétique **2** et le codeur magnétique **7.** Selon une caractéristique de réalisation, la cible **13** est rapportée ou fait partie intégrante d'une poulie d'entraînement, d'une poulie de vilebrequin, ou d'une poulie de came.

Selon une autre caractéristique de réalisation, la cible **13** est destinée à être montée à l'intérieur d'une plaque de support d'un joint d'étanchéité dynamique pour un arbre de transmission entre le vilebrequin et la boîte de vitesses d'un moteur d'un véhicule automobile. La cible **13** est entraînée en rotation par l'arbre de transmission, et se trouve montée en relation de proximité des cellules de détection montées sur la plaque de support du joint d'étanchéité afin de constituer un capteur de position.

Selon une autre caractéristique de réalisation, la cible **13** selon l'invention est entraînée en rotation par le vilebrequin ou l'arbre à came d'un moteur d'un véhicule automobile en étant montée à l'intérieur du bloc moteur d'un tel véhicule, en relation de proximité des cellules de détection afin de constituer un capteur de position.

L'invention n'est pas limitée aux exemples décrits et représentés car diverses modifications peuvent y être apportées sans sortir de son cadre défini exclusivement par les revendications.

## Revendications

1. Capteur magnétique rotatif **(I)** comportant :
- un capteur magnétique de position **(1)** comprenant au moins une piste magnétique **(2)** apte à être entraînée en rotation par un moyen d'entraînement rotatif et à défiler devant au moins une cellule de détection **(3)** sensible à un champ magnétique, la piste magnétique **(2)** étant réalisée sous la forme d'un anneau magnétique multipolaire pourvu, d'une part, d'une série d'éléments générateurs **(4)** d'un champ magnétique variable, répartis selon un pas d'écartement régulier de manière que la cellule de détection **(3)** délivre un signal électrique périodique de référence **(S**_{**0**}**)** correspondant à l'évolution de l'intensité du champ magnétique généré par les éléments et, d'autre part, d'au moins un élément générateur irrégulier (**4**_{**1**}) présentant un écartement différent par rapport au pas d'écartement régulier des autres éléments générateurs de manière que le signal électrique de référence **(S**_{**0**}**)** délivré par la cellule de détection présente une discontinuité (**D**).
- au moins un codeur magnétique **(7)** apte à être entraîné en rotation par le moyen d'entraînement rotatif et à défiler devant une cellule de détection (**8**) sensible à un champ magnétique, le codeur magnétique **(7)** étant formé par une suite d'éléments générateurs **(9)** d'un champ magnétique variable,
**caractérisé en ce que** :
• ledit au moins un codeur magnétique **(7)** est un moyen **(6)** de génération d'un code d'identité **(C)** pour le capteur magnétique de position **(1)** les élément générateurs **(9)** dudit au moins un codeur magnétique **(7)** étant arrangés de manière que la cellule **(8)** délivre un signal de codage **(S**_{**C**}**)** formé par une combinaison de signaux correspondant au code d'identité **(C)** du capteur magnétique,
• et **en ce que** le capteur magnétique rotatif **(I)** comporte en plus des moyens **(11)** d'analyse du signal de codage **(S**_{**C**}**)**, à l'aide du signal périodique de référence **(S**_{**0**}**)** qui constitue une horloge pour le décodage du signal de codage **(S**_{**C**}**),** de manière à lire le code d'identité **(C)** du capteur magnétique de position **(1).**

2. Capteur **(I)** selon la revendication 1, **caractérisé en ce que** les éléments générateurs d'un champ magnétique variable **(4, 4**_{**1**}**, 9)** de l'anneau magnétique **(2)** et du codeur magnétique **(7)** sont chacun formés par des pôles magnétiques alternés.

3. Capteur **(I)** selon la revendication 1, **caractérisé en ce que** les éléments générateurs d'un champ magnétique variable **(4, 4**_{**1**}**, 9)** de l'anneau magnétique **(2)** et du codeur magnétique **(7)** sont chacun formés par des éléments perturbateurs d'un champ magnétique créé par un aimant fixe placé à proximité desdits éléments.

4. Capteur **(I)** selon la revendication 2 **caractérisé en ce que** l'anneau magnétique **(2)** et le codeur magnétique **(7)** sont formés chacun à partir d'une bague élastomère ou plastique chargée de particules magnétisées pour constituer les pôles magnétiques.

5. Capteur **(I)** selon l'une des revendications 1 à 4, **caractérisé en ce que** l'anneau magnétique **(2)** et le codeur magnétique **(7)** sont montés sur une cible **(13)** calée en rotation sur un arbre d'un moteur d'un véhicule automobile, de sorte que la cellule de détection **(3),** montée en relation de l'anneau magnétique **(2),** délivre un signal périodique de référence **(S**_{**0**}**)** représentatif du régime moteur.

6. Capteur **(I)** selon la revendication 5, **caractérisé en ce que** la cible **(13)** comporte une paroi périphérique **(13**_{**1**}**)** et une paroi transversale **(13**_{**2**}**)** destinées à recevoir respectivement l'anneau magnétique **(2)** et 1c codeur magnétique **(7).**

7. Capteur **(I)** selon la revendication 5 ou 6, **caractérisé en ce que** la cible **(13)** est rapportée ou fait partie intégrante d'une poulie d'entraînement.

8. Capteur **(I)** selon la revendication 7, **caractérisé en ce que** la poulie d'entraînement est une poulie de vilebrequin.

9. Capteur **(I)** selon la revendication 7, **caractérisé en ce que** la poulie d'entraînement est une poulie de came.

10. Capteur (**I**) selon la revendication 5 ou 6, **caractérisé en ce que** la cible **(13)** est montée à l'intérieur d'une plaque de support d'un joint d'étanchéité dynamique, montée en relation de proximité des cellules de détection **(3, 8)** et entre le vilebrequin et la boîte de vitesses d'un moteur d'un véhicule automobile.

11. Capteur (**I**) selon la revendication 5 ou 6, **caractérisé en ce que** la cible **(13)** est entraînée en rotation par le vilebrequin ou l'arbre à cames, en étant montée à l'intérieur du bloc moteur d'un véhicule automobile et en relation de proximité des cellules de détection **(3, 8).**

12. Dispositif de sécurité, **caractérisé en ce qu'**il comporte :
• un capteur **(I)** conforme à l'une des revendications 1 à 11,
• et des moyens de contrôle **(14)** reliés aux moyens d'analyse **(11)** et permettant :
- de comparer le code d'identité **(C)** du capteur **(I)** et un code d'identification (**CI**),
- et lorsque le code d'identité **(C)** du capteur **(I)** correspond au code d'identification **(CI),** d'autoriser la sortie du signal périodique de référence **(S**_{**0**}**),**
- et lorsque le code d'identité **(C)** du capteur **(I)** ne correspond pas au code d'identification (**CI**), à inhiber la sortie du signal périodique de référence **(S**_{**0**}**).**

13. Dispositif de sécurité selon la revendication 12, **caractérisé en ce que** les moyens de contrôle **(14)** sont intégrés au capteur (**I**).

## Claims

1. Rotating magnetic sensor (I)comprising:
• a magnetic position sensor (1) containing at least one magnetic track (2) able to be driven in rotation by rotatory driving means and to travel in front of at least one detection cell (3) sensitive to a magnetic field, the magnetic track (2) being in the form of a multipolar magnetic ring provided firstly with a series of generator elements (4) generating a variable magnetic field and spaced apart at a regular pitch so that the detection cell (3) delivers a periodic electric reference signal (S₀) corresponding to changes in intensity of the magnetic field generated by the elements, and secondly provided with at least one irregular generator element (4₁) having different spacing to the regular spacing pitch of the other generator elements so that the electric reference signal (S₀) delivered by the detection cell has discontinuity (D).
• at least one magnetic encoder (7) able to be driven in rotation by the rotatory driving means and to travel in front of a detection cell (8) sensitive to a magnetic field, the magnetic encoder (7)being formed of a sequence of elements (9) generating a variable magnetic field,
**characterized in that**:
- said at least one magnetic encoder (7) forms means (6) for generating an identity code (C) for the magnetic position sensor (1), the generator elements (9) of said at least one magnetic encoder (7) being arranged so that the cell (8) delivers an encoding signal (s_{C}) formed by a combination of signals corresponding to the identity code (C) of the magnetic sensor,
- and **in that** the rotating magnetic sensor (I) also comprises means (11) for analysing the encoding signal (S_{C}) using the periodic reference signal (S₀) which forms a clock for decoding the encoding signal (S_{C}) so as to read the identity code (C) of the magnetic position sensor (1).

2. Sensor (I) as in claim 1, **characterized in that** the elements generating a variable magnetic field (4, 4₁, 9) of the magnetic ring (2) and of the magnetic encoder (7) are each formed by alternate magnetic poles.

3. Sensor (I) as in claim 1, **characterized in that** the elements generating a variable magnetic field (4, 4₁, 9) of the magnetic ring (2) and of the magnetic encoder (7) are each formed of elements disturbing of a magnetic field set up by a fixed magnet positioned in the vicinity of said elements.

4. Sensor (I) as in claim 2, **characterized in that** the magnetic ring (2) and the magnetic encoder (7) are each formed from an elastomeric or plastic ring charged with magnetized particles to form magnetic poles.

5. sensor (I) as in any of claims 1 to 4, **characterized in that** the magnetic ring (2) and the magnetic encoder (7) are mounted on a target (13) rotatably attached to an engine shaft of a motor vehicle, so that the detection cell (3) mounted in relation to the magnetic ring (2) delivers a periodic reference signal (S₀) representing engine rotation.

6. Sensor (I) as in claim 5, **characterized in that** the target (13) comprises a peripheral wall (13₁) and a transverse wall (13₂) intended to receive the magnetic ring (2) and magnetic encoder (7) respectively.

7. Sensor (I) as in claim 5 or 6, **characterized in that** the target (13) is added to or forms an integral part of a drive pulley.

8. Sensor (I) as in claim 7, **characterized in that** the drive pulley is a crankshaft pulley.

9. Sensor (I) as in claim 7, **characterized in that** the drive pulley is a cam pulley.

10. Sensor (I) as in claim 5 or 6, **characterized in that** the target (13) is mounted inside a support plate of a dynamic seal, mounted in close vicinity the detection cells (3,8) and between the crankshaft and the gearbox of the engine of a motor vehicle.

11. Sensor (I) as in claim 5 or 6, **characterized in that** the target (13) is driven in rotation by the crankshaft or the camshaft, being mounted inside the engine block of a motor vehicle and in close vicinity of the detection cells (3,8).

12. Security device, **characterized in that** it comprises;
• a sensor (I) conforming to any of claims 1 to 11,
• control means (14) connected to the analysis means (11) and allowing:
- comparison between the identity code (C) of the sensor (I) and an identification code (CI),
- if the identity code (C) of the sensor (I) matches the identification (CI): authorized output of the periodic reference signal (S₀),
- if the identity code (C) of the sensor (I) does not match the identification code (CI); inhibited output of the periodic reference signal (S₀).

13. Security device as in claim 12, **characterized in that** the control means (14) are integrated in the sensor (I).

## Patentansprüche

1. Magnetischer Drehsensor (I) umfassend:
- einen magnetischen Positionsgeber (1), der wenigstens eine Magnetspur (2) umfaßt, die geeignet ist, über ein Drehantriebsmittel drehangetrieben zu werden und an wenigstens einer gegenüber einem Magnetfeld empfindlichen Erfassungszelle (3) vorbeizulaufen, wobei die Magnetspur (2) in Form eines mehrpoligen Magnetrings ausgebildet ist, der einerseits mit einer Reihe von Elementen (4) zur Erzeugung eines variablen Magnetfeldes, die entsprechend einem gleichmäßigen Teilungsschritt verteilt sind, so daß die Erfassungszelle (3) ein periodisches elektrisches Referenzsignal (S₀) liefert, das der Entwicklung der Stärke des durch die Elemente erzeugten Magnetfeldes entspricht, und andererseits mit wenigstens einem unregelmäßig erzeugenden Element (4₁) versehen ist, das eine im Vergleich zu dem gleichmäßigen Teilungsschritt der anderen erzeugenden Elemente abweichende Weite aufweist, so daß das durch die Erfassungszelle gelieferte elektrische Referenzsignal (S₀) eine Diskontinuität (D) aufweist,
- wenigstens einen Magnetcodierer (7), der geeignet ist, über das Drehantriebsmittel drehangetrieben zu werden und an einer gegenüber einem Magnetfeld empfindlichen Erfassungszelle (8) vorbeizulaufen, wobei der Magnetcodierer (7) von einer Folge von Elementen (9) zur Erzeugung eines variablen Magnetfeldes gebildet ist,
**dadurch gekennzeichnet, daß**
• der wenigstens eine Magnetcodierer (7) ein Mittel (6) zur Erzeugung eines Identitätscodes (C) für den magnetischen Positionsgeber (1) ist, wobei die erzeugenden Elemente (9) des wenigstens einen Magnetcodierers (7) derart angeordnet sind, daß die Zelle (8) ein Codiersignal (S_{C}) liefert, das von einer dem Identitätscode (C) des Magnetgebers entsprechenden Kombination von Signalen gebildet ist,
• und daß der magnetische Drehsensor (I) ferner Mittel (11) zur Analyse des Codiersignals (S_{C}) mit Hilfe des periodischen Referenzsignals (S₀) umfaßt, das einen Taktgeber für die Decodierung des Codiersignals (S_{c}) bildet, so daß der Identitätscode (C) des magnetischen Positionsgebers (1) gelesen wird.

2. Sensor (I) nach Anspruch 1, **dadurch gekennzeichnet, daß** die Elemente zur Erzeugung eines variablen Magnetfeldes (4, 4₁, 9) des Magnetrings (2) und des Magnetcodierers (7) jeweils von abwechselnden Magnetpolen gebildet sind.

3. Sensor (I) nach Anspruch 1, **dadurch gekennzeichnet, daß** die Elemente zur Erzeugung eines variablen Magnetfeldes (4, 4₁, 9) des Magnetrings (2) und des Magnetcodierers (7) jeweils von Störelementen eines Magnetfeldes gebildet sind, das durch einen in der Nähe der genannten Elemente angeordneten festen Magneten erzeugt wird.

4. Sensor (I) nach Anspruch 2, **dadurch gekennzeichnet, daß** der Magnetring (2) und der Magnetcodierer (7) jeweils aus einem Elastomer- oder Kunststoffring gebildet sind, der zur Bildung der Magnetpole mit magnetisierten Teilchen beladen ist.

5. Sensor (I) nach einem der Ansprüche 1 bis 4, **dadurch gekennzeichnet, daß** der Magnetring (2) und der Magnetcodierer (7) an einer Scheibe angebracht sind, die an einer Welle eines Motors eines Kraftfahrzeugs drehfestgesetzt ist, so daß die Erfassungszelle (3), die in Beziehung zu dem Magnetring (2) angebracht ist, ein für die Motordrehzahl repräsentatives periodisches Referenzsignal (S₀) liefert.

6. Sensor (I) nach Anspruch 5, **dadurch gekennzeichnet, daß** die Scheibe (13) eine Umfangswand (13₁) sowie eine querverlaufende Wand (13₂) umfaßt, die dazu bestimmt sind, den Magnetring (2) bzw. den Magnetcodierer (7) aufzunehmen.

7. Sensor (I) nach Anspruch 5 oder 6, **dadurch gekennzeichnet, daß** die Scheibe (13) angesetzt ist oder einen integrierenden Bestandteil einer Antriebscheibe bildet.

8. Sensor (I) nach Anspruch 7, **dadurch gekennzeichnet, daß** die Antriebscheibe eine Kurbelwellenscheibe ist.

9. Sensor (I) nach Anspruch 7, **dadurch gekennzeichnet, daß** die Antriebscheibe eine Nockenscheibe ist.

10. Sensor (I) nach Anspruch 5 oder 6, **dadurch gekennzeichnet, daß** die Scheibe (13) innerhalb einer Tragplatte einer dynamischen Dichtung angebracht ist, die in Näheverhältnis zu den Erfassungszellen (3, 8) sowie zwischen der Kurbelwelle und dem Getriebe eines Motors eines Kraftfahrzeugs angeordnet ist.

11. Sensor (I) nach Anspruch 5 oder 6, **dadurch gekennzeichnet, daß** die Scheibe (13) über die Kurbelwelle oder die Nockenwelle drehangetrieben wird, indem sie innerhalb des Motorsblocks eines Kraftfahrzeugs und im Näheverhältnis zu den Erfassungszellen (3, 8) angebracht ist.

12. Sicherheitsvorrichtung, **dadurch gekennzeichnet, daß** sie folgendes umfaßt:
• einen Sensor (I) nach einem der Ansprüche 1 bis 11,
• sowie Kontrollmittel (14), die mit den Analysemitteln (11) verbunden sind und die ermöglichen:
- den Identitätscode (C) des Sensors (I) mit einem Identifikationscode (Cl) zu vergleichen,
- und dann, wenn der Identitätscode (C) des Sensors (I) dem Identifikationscode (Cl) entspricht, die Ausgabe des periodischen Referenzsignals (S₀) zuzulassen,
- und dann, wenn der Identitätscode (C) des Sensors (I) nicht dem Identifikationscode (Cl) entspricht, die Ausgabe des periodischen Referenzsignals (S₀) zu verhidern.

13. Sicherheitsvorrichtung nach Anspruch 12, **dadurch gekennzeichnet, daß** die Kontrollmittel (14) in den Sensor (I) integriert sind.
